# EUROPEAN PATENT SPECIFICATION

(11) **EP 4 115 284 B1**
(45) Date of publication and mention of the grant of the patent: **04.03.2026**
(21) Application number: 21710275.5
(22) Date of filing: 05.03.2021
(51) Int. Cl.: G06F 9/455, G06F 1/3206, G06F 1/3203

(54) **POWER MANAGEMENT ON A VEHICLE**
LEISTUNGSVERWALTUNG IN EINEM FAHRZEUG
GESTION D'ÉNERGIE SUR UN VÉHICULE

(30) Priority: 05.03.2020 GB 202003205
(43) Date of publication of application: 11.01.2023
(73) Proprietor: Jaguar Land Rover Limited, Coventry, Warwickshire CV3 4LF (GB)
(72) Inventor: STREIF, Rudolf, Coventry Warwickshire CV3 4LF (GB); VAN WIJK, Gido, Coventry Warwickshire CV3 4LF (GB); SAWHNEY, Devender, Coventry Warwickshire CV3 4LF (GB); GRAY, Mark, Coventry Warwickshire CV3 4LF (GB)
(74) Representative: Jaguar Land Rover Patents Department
(86) International application number: PCT/EP2021/055586
(87) International publication number: WO 2021/176053

(56) References cited:
- US-A1- 2005 268 078
- US-A1- 2012 239 323
- US-A1- 2018 293 067

## Description

### TECHNICAL FIELD

The present disclosure relates to power management on a vehicle. Aspects of the invention relate to a vehicle control system, to a vehicle, and to a method of changing a global power state of a vehicle control system.

### BACKGROUND

Traditional automotive electronic control units (ECUs) only have a single software system or feature-set running and operating in-sync with the vehicle. For example, chassis control system, body-control module, powertrain etc. are all directly operating hardware systems in the vehicle. For most of these ECUs, the power management strategy is fairly straightforward: when the vehicle is ON, the ECU should be up & running; when the vehicle is OFF, the ECU should be down, with potentially different operating modes depending on the vehicle Power Mode (PM) for the more advanced ECUs.

Modern vehicles however are becoming increasingly connected and have ever increasing amounts of computational power within their on-board vehicle control systems. For example, the main vehicle controller may have 25GB or more of memory that is used by the main system software.

Within such a vehicle controller, functionality equivalent to several standalone ECUs may be hosted in virtual machines (VMs) running on a hypervisor, the operating software, on the vehicle controller.

Such a "multi-ECU" vehicle controller may host a number of different virtual machines having a number of different software implemented ECUs, such as the vehicle telematics control unit, a software over the air (SOTA) control unit, a vehicle diagnostics control unit and others. The telematics, SOTA and diagnostics control units may be hosted in different virtual machines which makes power management needs complex. For example, the telematics control unit offers remote features to the vehicle driver and so should be "always on" since it will only be able to respond when it is "ON".

Applications running on other virtual machines may have different power management needs from each other and from the telematics stack. Since the telematics stack is linked to remote driver functionality it will be treated as the "master" unit and thus could introduce power management issues for the other virtual machines and the applications running thereon. For example, the telematics stack could request the vehicle controller to go in "Listen" mode, which suspends the Telematics VM but shuts down the other virtual machines (VMs). In this scenario, the other VMs may be shut down while they are executing critical code, such as file system operations, or in the case of SOTA, an update package download.

For the above reasons, a "multi-ECU" vehicle control system requires a different power management strategy than more traditional ECUs. It needs to support power management services for several components at the same time and needs to have a "stand-by" power mode for the Telematics stack.

Known art includes US 2005/268078 A1, which describes distributed advanced power management.

It is an aim of the present invention to address one or more of the disadvantages associated with the prior art.

### SUMMARY OF THE INVENTION

Aspects and embodiments of the invention provide a vehicle control system, to a vehicle, and to a method of changing a global power state of a vehicle control system as claimed in the appended claims. The scope of the invention is defined by the appended claims.

According to an aspect of the present invention there is provided a vehicle control system comprising one or more controllers, the vehicle control system comprising a global power state and comprising at least two virtual machines being hosted on the one or more controllers wherein each virtual machine has a local power state, the vehicle control system configured to: receive a vehicle parameter signal indicative of a required global power state of the vehicle control system; and determine a local power state for each virtual machine in dependence on the received vehicle parameter signal; update a current local power state of each virtual machine to the respective determined local power state therefor.

The present invention provides a vehicle control system having a global power state (e.g. normal, lower power, sleep) and at least two virtual machines each of which has a local power state. Upon receiving a vehicle parameter power signal which could be a signal indicating the state of a vehicle CAN bus, vehicle battery voltage, an input from one of the virtual machines or a signal from outside the vehicle received via a modem, the vehicle control system is arranged to determine the local power state of each virtual machine on the basis of the received vehicle parameter signal and to update the local power state accordingly. In this manner the virtual machines may be placed into an appropriate power state as the global state of the vehicle changes. It is noted that the vehicle parameter signal may also represent a passive determination that the vehicle system is on or off by monitoring the vehicle CAN. It is further noted that the vehicle parameter signal may not necessarily require a power state change to occur but could represent a reconfirmation of state.

The one or more controllers may collectively comprise: at least one electronic processor having an electrical input for receiving the vehicle parameter signal indicative of the required global power state of the vehicle control system; and at least one memory device electrically coupled to the at least one electronic processor and having instructions stored therein; and wherein the at least one electronic processor may be configured to access the at least one memory device and execute the instructions thereon so as to determine a local power state for each virtual machine in dependence on the received vehicle parameter signal.

The processor may comprise an output configured to output a first output signal to the virtual machines to update the current local power state of each virtual machine to the respective determined local power state therefor; and output a second output signal to update a current global power state of the vehicle control system to the required global power state.

The processor may comprise a virtual machine manager configured to output the first
output signal. The processor may comprise a power manager and the virtual machine manager may be configured to notify the power manager when the at least two virtual machines are in the determined local power state. The power manager may be configured to output the second output signal to transition the vehicle controller to the required global power state. The power manager may be configured to output the second output signal after the virtual machine manager notifies the power manager that the virtual machines are in the determined local power state.

The power manager may be configured to receive the vehicle parameter signal and to send a global power state signal to the virtual machine manager indicating the required global power state. The virtual machine manager may comprise a configuration file that maps the local power state of each virtual machine to a global power state of the vehicle control system and wherein the virtual machine manager is configured to determine the local power state of each virtual machine based on the received global power state signal.

Each virtual machine may comprise a power management service and the power management service may be configured to receive the vehicle parameter signal. The power management service may be configured to send a local power state request to the power manager. The power manager may be configured to transmit the local power state request to the virtual machine manager.

The virtual machine manager may be configured to update the local power state of the virtual machines that have not raised a local power state request in response to receiving the vehicle parameter signal.

One of the virtual machines may be a telematics control unit. The local power state request may be a request to prevent the telematics control unit transitioning to a shut-down local power state. The telematics control unit may be configured to send the local power state request when the global power state is being updated from an ON state, in which all of the virtual machines are active, to a LISTEN state in which the telematics control unit is active or suspended.

The processor may comprise a timer, wherein the timer may be configured to be started when the global power state is updated to the LISTEN state and wherein the processor may be configured to update the global power state to a SLEEP state, in which the telematics control unit is shut-down, at the expiry of the timer.

The vehicle parameter signal may be indicative of at least one of: a CAN state, a vehicle battery voltage, a modem communication and a request from a virtual machine.

The local power state of each of the two or more virtual machines may be any one of: active, shut-down or suspended.

The processor may be configured to determine the new global power state in dependence on the received vehicle parameter signal.

According to another aspect of the present invention, there is provided a vehicle comprising a controller in accordance with any one of the aforementioned aspects and embodiments.

According to a further aspect of the present invention there is provided a method of changing a global power state of a vehicle control system comprising one or more controllers and at least two virtual machines hosted on one of the controllers wherein each virtual machine has a local power state, the method comprising: receiving a vehicle parameter signal indicative of a required global power state of the vehicle control system; determining, based on the received vehicle parameter signal, a local power state for each virtual machine in dependence on the received vehicle parameter signal; updating a current local power state of each virtual machine to the respective determined local power state therefor.

The method may comprise updating a current global power state of the vehicle control system to the required global power state. The method may comprise receiving a local power state request from a virtual machine and may comprise maintaining the virtual machine in the local power state in response to the local power state request.

According to a yet further aspect of the present invention there is provided a non-transitory computer readable medium comprising computer readable instructions that, when executed by a processor, cause performance of the method of any one of the aforementioned aspects and embodiments.

The invention extends to a hypervisor for controlling the power state of a vehicle controller, to a vehicle controller, and to a method of controlling the power state of a vehicle controller as claimed in the appended claims.

The invention may extend to a hypervisor for controlling a power state of a vehicle controller, the vehicle controller comprising at least two virtual machines hosted on the vehicle controller, the hypervisor may be configured to: receive an active status indication from at least one virtual machine; determine, in dependence on the active status indication, if at least one virtual machine is active; and inhibit a reduced power state of the vehicle controller if the hypervisor determines that at least one virtual machine is active.

The present invention may provide a hypervisor that is configured to receive active status indications from the virtual machines hosted on the vehicle controller. Such active status indications may take the form of power requirement messages that indicate to the hypervisor that virtual machines (or applications running on the virtual machines) require power, e.g. to complete a critical task or to download a software update. By this mechanism the hypervisor may inhibit the vehicle controller entering a reduced power state until such time as the virtual machine (or applications within the virtual machine) have completed the tasks for which they require power.

The hypervisor may comprise a power manager wherein the power manager is configured to output a power state control signal to change the power state of the vehicle controller. The virtual machine manager and power manager may together be responsible for the power status of the virtual machines and the control of the power state of the vehicle control system. The virtual machine manager and power manager may take the form of software programs running within the hypervisor. Alternatively, they may be software based electronic control units running on the hypervisor.

The virtual machine manager may be configured, when at least one of the virtual machines requires power, to output a power requirement signal to the power manager to inhibit the power manager from outputting the power state control signal to change the power state of the vehicle controller.

The active status indication may comprise a virtual machine identifier. This allows the hypervisor to keep track of which virtual machines (or applications within virtual machines) have sent indications indicating that they have an active status.

The virtual machine manager may comprise a power status counter. Further, the power status counter may comprise at least two power status counter values such that each power status counter value corresponds to a virtual machine hosted on the vehicle controller. In this way the virtual machine manager may keep track of active status indications received from the various virtual machines within the controller. For example, for a virtual machine that hosts multiple different applications (which may be unaware of the existence of each other and may even have been developed by different developers), a first application within the virtual machine may send an active status indication and the virtual machine manager may increase the power status counter value for that virtual machine by a first increment (e.g. "0" to "1"). A second application within the virtual machine may then send an active status indication and the power status counter value could be increased by a further increment (e.g. "1" to "2"). While the power status counter value remains above a datum value (in this case "0") the virtual machine manager knows that there is at least one application within that virtual machine that requires power to remain in an active status and consequently can inhibit the controller from entering a reduced power state. The power status counter value may therefore be altered for the at least one virtual machine that has sent the active status indication.

The active status indication comprises a positive power requirement message from one of the virtual machines and the power status counter value for that virtual machine may be configured to be increased in response to the positive power requirement message.

The active status indication may comprise a negative power requirement message from one of the virtual machines and the power status counter value for that virtual machine may be configured to be decreased in response to the negative power requirement message.

The active status indication may be a keep alive request generated by one of the
virtual machines to indicate to the hypervisor that the virtual machine requires power.

The hypervisor may be configured to initiate a timer upon receipt of an active status indication from the at least one virtual machine and wherein the hypervisor may be configured to alter the power status counter value for the at least one virtual machine in dependence on the timer. In this manner when the hypervisor receives a keep alive request a time may be started (e.g. a timer sequence may be started either counting up to a predetermined value or counting down to zero) and at the end of timer sequence the power status counter value could be altered (e.g. reset to the datum value). This advantageously avoids the vehicle controller being left stuck in a powered on state because, for example, a virtual machine has not cancelled a keep alive request. The timer may therefore be configured to reset the power status counter value to a datum point at the expiry of the timer.

The hypervisor may be configured to receive a shut-down request signal to change the power state of the vehicle controller from an ON state to a reduced power state and wherein the hypervisor is configured to output a power state control signal to transition the vehicle controller from the ON state to the reduced power state when the hypervisor determines that none of the virtual machines require power. The reduced power state may be one in which virtual machines are suspended or powered off.

Each virtual machine may comprise a plurality of applications, each application being configured to send active status indications.

A vehicle controller may be provided comprising a hypervisor as described above. The vehicle controller may comprise: at least one electronic processor having an electrical input for receiving the active status indication; and at least one memory device electrically coupled to the at least one electronic processor and having instructions stored therein; and wherein the at least one electronic processor may be configured to access the at least one memory device and execute the instructions thereon so as to inhibit a reduced power state of the vehicle controller if the hypervisor determines that at least one virtual machine is active.

There may be provided a method of controlling a power state of a vehicle controller, the vehicle controller comprising at least two virtual machines hosted on the vehicle controller, and the method may comprise: receiving an active status indication from at least one virtual machine; determining, in dependence on the active status indication, if at least one virtual machine is active; and inhibiting a reduced power state of the vehicle controller if the hypervisor determines that at least one virtual machine is active.

The method may comprise determining which virtual machine sent the active status indication and varying a power status counter value corresponding to the virtual machine in response to receiving the power requirement message.

The method may further comprise determining if any of the virtual machines require power by comparing the power status counter value with a datum point.

The method may comprise starting a timer upon receipt of the active status indication and altering the power status counter value in dependence on the timer. The power status counter value may be reset to the datum point at the expiry of the timer.

The method may comprise receiving a shut-down request signal to change the power state of the vehicle controller from an ON state to the reduced power state (e.g. a suspended state or an off state) and wherein the method may comprise outputting a power state control signal to transition the vehicle controller from the ON state to the reduced power state when it is determined that none of the virtual machines require power.

According to a yet further aspect of the present invention there is provided a non-transitory computer readable medium comprising computer readable instructions that, when executed by a processor, cause performance of the method of any one of the aforementioned aspects and embodiments.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a vehicle comprising a vehicle control system according to an embodiment of the invention;
Figure 2 shows a schematic diagram of vehicle controller in accordance with embodiments of the invention;
Figure 3 shows a schematic view of a processor of the vehicle controller of Figure 2 in more detail;
Figure 4 shows a flow chart outlining the method steps of controlling the power state of a controller according to embodiments of the invention;
Figure 5 shows a view of components of the vehicle controller of Figures 2 and 3 in more detail;
Figure 6 shows a further schematic diagram of vehicle controller in accordance with embodiments of the invention;
Figure 7 shows a flow chart outlining the method steps of changing the global power state of a vehicle controller according to embodiments of the invention;
Figure 8 shows a simplified example of a control system suitable for use with embodiments of the invention.

### DETAILED DESCRIPTION

In general terms embodiments of the invention relate to a vehicle control system and methods of operating a vehicle control system that provide improved power management functionality.

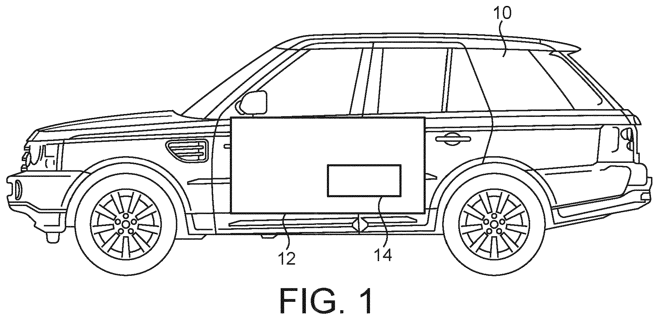

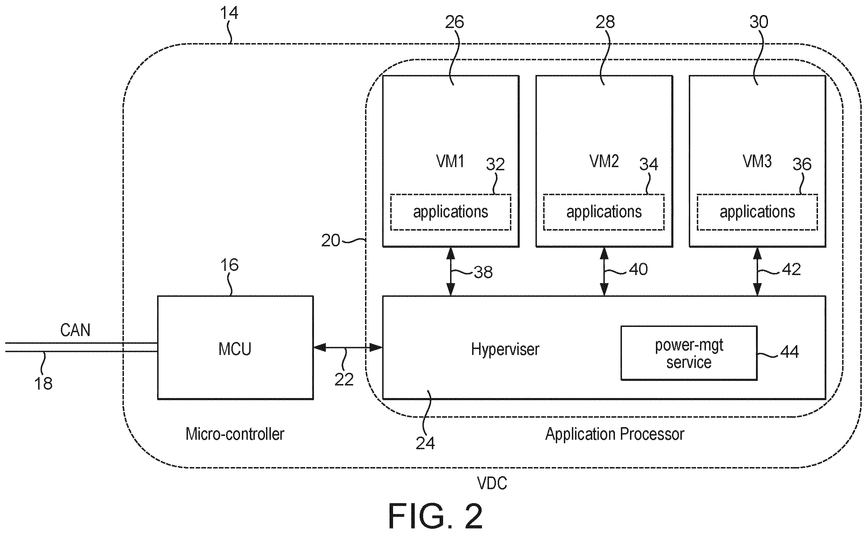

To place embodiments of the invention in a suitable context reference will firstly be made to Figure 1 which shows a vehicle 10 comprising a vehicle control system 12 comprising one or more vehicle controllers 14 (for clarity only one controller is shown in Figure 1). As described in relation to Figures 2 to 7 the vehicle control system comprises a vehicle controller 14 (also referred to herein as a vehicle domain controller) that comprises multiple "software" ECUs hosted on a plurality of virtual machines overseen by a hypervisor running on the controller 14. The vehicle controller 14 and the vehicle control system 12 that the controller is part of represents a multi-ECU system in which the management of power requirements to different applications (e.g. telematics, SOTA, diagnostics) running on the various virtual machines is multifaceted.

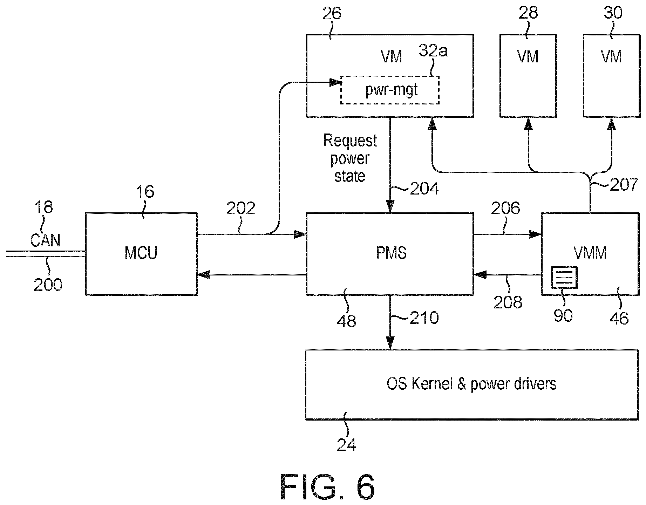

Figure 2 shows a schematic diagram of a vehicle controller 14 in accordance with an embodiment of the present invention. The vehicle controller 14 hardware comprises a microcontroller unit 16 which runs basic hardware power management, and in the illustrated embodiment the controller area network (CAN) stack 18. The vehicle controller 14 further comprises an application processor 20 which hosts the various "software" ECUs. The MCU 16 and application processor 20 are in communication 22 with each other (see Figure 6 and the discussion of the operation of the power manager 48 and virtual machine manager 46 below).

The application processor 20 runs a hypervisor 24 which in turn hosts three virtual machines 26, 28, 30. Each virtual machine (VM) has one or more applications 32, 34, 36 that runs on it. Each virtual machine 26, 28, 30 is in communication 38, 40, 42 with a power management service 44 that runs on the hypervisor 24.

The virtual machines 26, 28, 30 run different software ECUs, e.g, telematics, software over the air (SOTA) and diagnostics. These virtual machines and the applications running thereon have different power management needs.

For example, telematics is a unit that should be "always on" (unless the vehicle is in "sleep" mode as discussed below) in order to provide remote features to the vehicle user and the power states of the individual virtual machines could be "running", "shutdown" or "suspended". The telematics unit may be treated as having overall control within the power management design of the vehicle controller 14, whereby if the telematics unit requests the vehicle controller 14 to go to a new power state while other applications on other virtual machines running on the vehicle controller 14 are in the middle of a process (e.g. executing critical code such as file system operations or, in the case of the SOTA unit, downloading an update package) this could cause applications to crash.

The power management service 44 according to embodiments of the present invention is configured to provide "keep alive" functionality to the applications running on the virtual machines to mitigate against applications crashing while avoiding leaving the vehicle controller 14 in a fully running power state indefinitely.

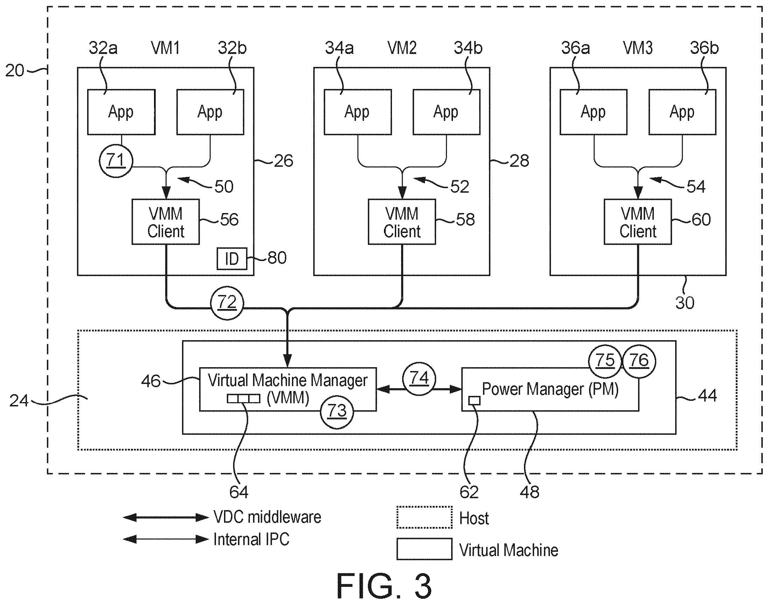

A more detailed schematic of the application processor 20 is provided in Figure 3 in which it can be seen that the power management service 44 comprises two processes, a virtual machine manager (VMM) 46 and a power manager 48, each of which handle different parts of the vehicle controller 14 power management.

It is noted that although two processes 46, 48 are shown in Figure 3, in an alternative configuration the power management service 44 may comprise a single process that handles all the functionality discussed herein relating to the virtual machine manager 46 and power manager 48.

The virtual machine manager 46 is responsible for the lifecycle of the virtual machines 26, 28, 30 and is arranged to monitor the power state of the virtual machines. The virtual machine manager 46 is further configured to be able to start and stop the virtual machines and to ensure they are running correctly at any given time. Further details on the functionality of the virtual machine manager 46 is provided below. Additionally, however, the virtual machine manager 46 manages a "keep alive" mechanism, in accordance with embodiments of the present invention, within the vehicle control system 12 that mitigates against applications crashing as the power states of the virtual machines are changed (e.g. when the telematics unit requests a power state change).

As shown in Figure 3, each of the virtual machines 26, 28, 30 comprises two applications running thereon (applications 32a, 32b in virtual machine 26, applications 34a, 34b in virtual machine 28 and applications 36a, 36b in virtual machine 30). It is however noted that the virtual machines may comprise more or fewer applications than those depicted. Examples of applications that may be hosted on a virtual machine include, but are not limited to: *telematics applications* such as emergency/breakdown call, logistics tracking, stolen vehicle tracking, remote vehicle control; *software over the air (SOTA) applications* such as Vehicle Update Controller, embedded on-board diagnostics, update package download; *Diagnostics applications* such as a diagnostics over IP (DoIP - standardized) server, unified diagnostics services (UDS - standardized) handler.

Within each virtual machine, each application is in communication with a virtual machine manager client (VMM client) via an inter process communication path (IPC paths 50, 52, 54). Applications 32a, 32b are therefore in communication with VMM client 56, applications 34a, 34b are in communication with VMM client 58 and applications 36a, 36b are in communication with VMM client 60.

The VMM clients 56, 58, 60 are in communication via middleware with the virtual machine manager 46 within the power management system 44.

The VMM clients 56, 58, 60 send periodic signals ("heartbeats") to the VMM 46 to indicate operational conditions of the applications within their respect virtual machines 26, 28, 30. As discussed below the VMM clients 56, 58, 60 enable applications within the virtual machines to register power requirement requests with the virtual machine manager 46, e.g. a request to maintain power (a "keep alive" request) or an indication that an application no longer needs to maintain power (because it has completed whatever tasks it was running). The power manager 48 and virtual machine manager 46 utilise a timer 62 and counter 64 as described in more detail below to keep track of power requirement requests from the virtual machines.

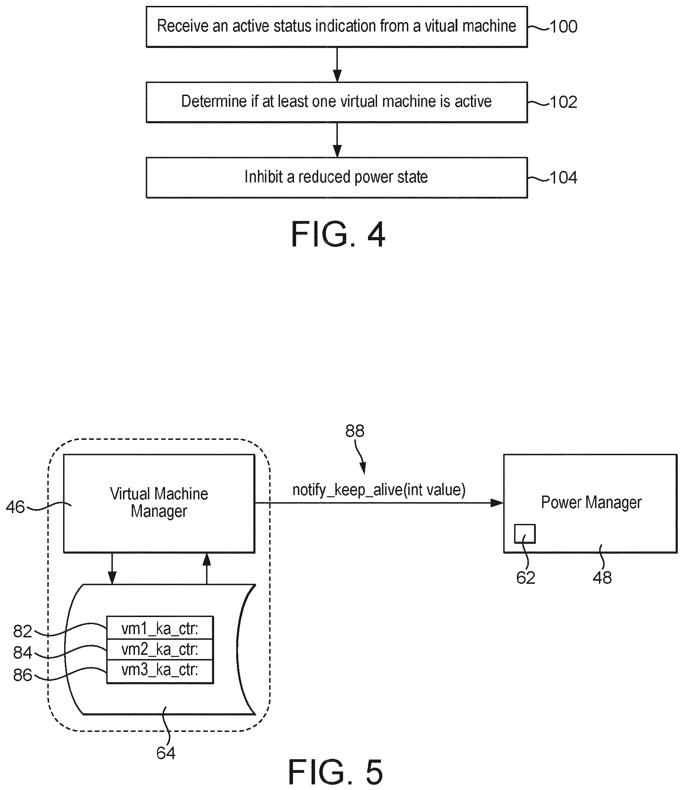

Figure 4 is a flow chart of a method of controlling the power state of a vehicle controller 14 in accordance with embodiments of the present invention.

In step 100 the hypervisor 24 (e.g. the virtual machine manager 46 within the hypervisor) receives an active status indication from at least one virtual machine. The active status indication that is received comprises information of the power management requirements of the applications running on the virtual machine that the indication has been received from, e.g. the active status indication may indicate that an application running on the virtual machine that has sent the indication requires power. Such an indication may be sent periodically or may be sent in response to the power management service 44 sending a communication indicating that the power state of the vehicle controller 14 is about to change. Applications running on the virtual machines may send such indications because they are in a critical state such as in the middle of executing critical code or in the middle of a software update, because they require additional time for some reason before a power state of the controller changes or for other reasons. Such an active status indication may take the form of a power requirement message and may be referred to herein as a "keep alive" message where an application has sent an indication that it needs to maintain power for a period (e.g. because it is part way through a process). The active status indication may however be an indication that an application, that had previous sent a "keep alive" message, now no longer requires power (e.g. because it has completed the process that it was running).

In step 102 the hypervisor determines in dependence on the active status indication received in step 100 a power requirement of the at least one virtual machine. This step may comprise referring to a power status counter that keeps track of all requests from the virtual machines to maintain power. The power status counter is described in more detail below in relation to Figure 5.

In step 104, if the hypervisor determines that at least one virtual machine requires power, then it inhibits the vehicle controller 14 from entering a reduced power state. This determination that at least one virtual machine requires power may initiate the start of a timer 62 (shown in Figure 3) to track the time from the determination being made. The timer may be provided to enable the hypervisor with a timeout mechanism. In this way the hypervisor may avoid being stuck in a state in which it cannot shutdown because a virtual machine has not cancelled a "keep alive" request.

In more detail, and in conjunction with Figure 3, the process of controlling the power state of a vehicle controller 14 in accordance with embodiments of the present invention is now described.

Within the hypervisor 24, the power manager 48 manages the control of the power state of the vehicle controller 14. It is noted that in the following description the active status indications relating to a positive power requirement request are referred to as "keep alive" messages.

The virtual machine manager 46 is responsible for the virtual machines (26, 28, 30) and keeps track of what virtual machine has requested power via a keep alive message.

The virtual machine manager 46 keeps track of power requirement messages received from the virtual machines via the counter 64. It is noted that within the counter 64 the virtual machine manager 46 maintains a counter value (shown in Figure 5) in respect of each virtual machine (26, 28, 30). As described below the virtual machine manager 46 will increase/decrease the counter value for each virtual machine so that several applications within a particular virtual machine can request a positive power requirement without interfering with each other.

An example of the steps that the virtual machine manager 46 may follow if applications 32a and 32b within virtual machine 26 both send positive power requirement messages (a "keep alive" message) and subsequent negative power requirement messages (i.e. they cancel or clear their keep alive messages) may be as follows:
- application 32a sends a first keep alive message via the virtual machine client 56 to the virtual machine manager 46. In response, the virtual machine manager 46 increments a keep alive counter value for virtual machine 26 to "1";
- application 32b then sends a second keep alive message via the virtual machine client 56 to the virtual machine manager 46. In response the virtual machine manager 46 increments the keep alive counter value for virtual machine 26 to "2";
- application 32a then clears the first keep alive message by sending an active status indication in the form of a negative power requirement message via the virtual machine client 56 to the virtual machine manager 46. The application 32a may send this message because, for example it has finished the task/process that caused it to send the keep alive message. In response to receiving the negative power requirement message, the virtual machine manager 46 decrements the counter value for virtual machine 26 to "1";
- application 32b then clears the second keep alive message by sending a negative power requirement message via the virtual machine client 56 to the virtual machine manager 46. In response to receiving the negative power requirement message, the virtual machine manager 46 decrements the counter value for virtual machine 26 to "0".

In order to avoid the vehicle controller 14 being stuck in a state in which it is inhibited from being shutdown because a virtual machine has not cancelled a "keep alive" request, a timer is provided to enable a power state to be triggered on expiry of the timer. This mechanism ensures the vehicle controller 14 does not become deadlocked.

The timer 62 is shown in Figure 3 as being within the power manager 48. It is also appreciated that the timer 62 may be provided within the virtual machine manager 46.

Including the action of the timer 62, the process of controlling the power state of the controller 14 is as follows:
1) Communication 71 - initially, the application 32a sends, over the inter process communication path 50 an active status indication (in the form of a "Keep Alive" request/positive power requirement message) to the VMM client 56 within the virtual machine 26.
2) Communication 72 - the virtual machine manager client 56 then forwards the keep alive request along with an identifier 80 of the virtual machine 56 to the virtual machine manager 46. This request is forwarded over the controller middleware.
3) Upon receiving the forwarded Keep Alive request, the VMM 46 increases the counter value (for that virtual machine identifier 80) within the counter 64.
4) The VMM 46 then forwards the Keep Alive request to the host Power Manager 48. This keep alive request is effectively a power requirement signal that is sent from the virtual machine manager 46 to the power manager 48 to inhibit the power manager from entering a reduced power state.
5) The power manager 48 then updates its internal state machine with a Keep Alive flag.
6) A configurable timer 62 is then started within the power manager 48 that will force the Keep Alive flag to be cleared upon timeout of the timer 62 such that the power state of the controller 14 can be changed. It is noted that the timeout period may be set to a period of a few seconds. In an alternative embodiment, as an alternative to clearing the Keep Alive flag and enabling the power state of the controller 14 to be changed at the end of the timer period, the virtual machine manager 46 could be arranged to send a message back to those applications that have submitted a Keep Alive request asking them to confirm if they still require power. In this manner an application that still requires power can reaffirm the Keep Alive request that they previously sent.

Figure 5 shows the counter 64 within the virtual machine manager 46 in more detail. The counter comprises counter values 82, 84, 86 for the virtual machines 26, 28, 30 respectively. As described above, the virtual machine manager 46 stores the counter value for each virtual machine in memory. The power manager 48 provides a single interface to the virtual machine manager (a power requirement signal in the form of a notification value "notify_keep_alive" (88)) which only takes one argument - either 1 or 0. The power manager 48 does not need to know which virtual machine 26, 28, 40 has sent the Keep Alive request, but only if a Keep Alive is on-going. In other words, if any of the counter values (82, 84, 86) are non-zero then one or more application (32a, 32b, 34a, 34b, 36a, 36b) has sent a Keep Alive request and so the notification value 88 is set to "1". A notification value of "0" means no application requires power and the power management service 44 is able to make a global power state change within the controller 14 as described below.

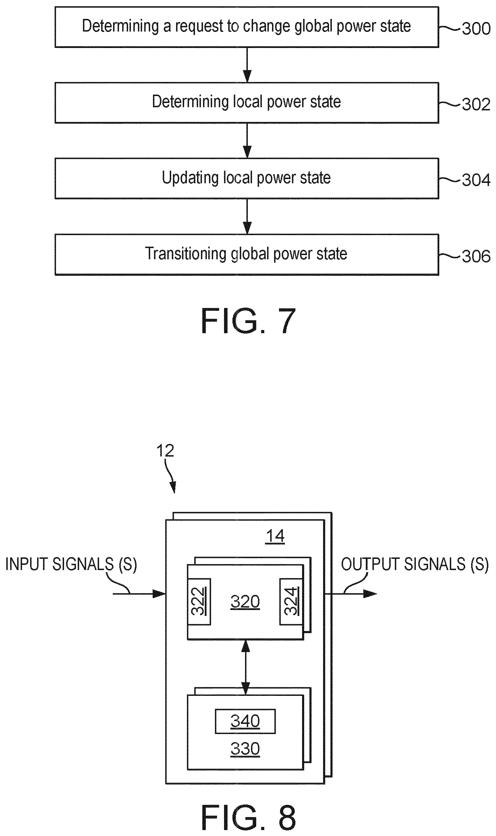

The operation of the power manager 48 and virtual machine manager 46 in transitioning the controller 14 between global power states is now described in combination with Figures 6 and 7.

It is noted that the vehicle controller 14 may have a number of global power states (in the table below these are "normal", "low power", "listen" and "sleep") and for each of these global power states the virtual machines may be in different states (i.e. different local power states).

The global power state and associated local power states that the virtual machines 26, 28, 30 may take are represented in the table below. In the table it is assumed that the virtual machine 26 is a telematics unit.

**Table 1**

| **Power State** | **Description** | **VM state** |
|---|---|---|
| NORMAL | This is the default power state. The vehicle controller is in this power state when the vehicle is being driven. In this power state, all VMs and applications are up and running | All VMs active |
| LOW_POWER | This is a power state where only Telematics is running to reduce power consumption. Also the processing power is drastically reduced. | Telematics only running |
| LISTEN | In this power state, the vehicle controller is suspended to RAM. SOTA & standard apps VMs are shut down, Telematics is kept suspended | Telematics suspended, other VMs down |
| SLEEP | The least power hungry state. In Sleep mode, the VDC is shut down | All shut down |

### Power Manager

The power manager 48 within the power management service 44 is configured to be responsible for the different power states of the vehicle controller 14 - meaning that it is arranged to receive all signals required for power management and that it is configured to select and make a power state transition when all conditions are met.

The power manager 48 is arranged to monitor for several inputs or vehicle parameter signals such as the CAN bus state, the vehicle battery voltage, modem communication, input from the virtual machines (Note: the power manager provides an interface for the applications in the virtual machines to request a new power state).

An overview of an example of the process of making a global power state change to the controller 14 in response to a trigger based on the CAN state is as follows:
1) It is noted that the main trigger for a global power state transition of the controller 14 is the CAN state (see vehicle parameter signal 200 in Figure 6).
   a. When the CAN bus 18 is active, it means the vehicle is active and the vehicle controller 14 should be fully operational. In that case, the vehicle controller is in the "normal" state and all virtual machines (26, 28, 40) are active.
   b. When the CAN bus is turned off (e.g. when the vehicle ignition is turned off), through CAN network management, the vehicle controller microcontroller unit (MCU) 16 gets a notification. This will start the power management process on the application processor 20.
2) The MCU 16 then transmits (signal 202) the CAN state to virtual machines (26, 28, 30) that are subscribed to a serial peripheral interface (SPI) dispatch service (that manages communications between hardware and software) and to the power management service 44 in the hypervisor 24. In Figure 6 the application 32a within the telematics virtual machine 26 is shown receiving the transmission from the MCU 16.
3) Application 32a within virtual machine 26 decides, based on the transmission from the MCU, that it wants to go to a different local power state (and that consequently the vehicle controller 14 is to go to a new global power state). Application 32a requests (communication 204) the new power state to the power manager 48 in the hypervisor.
4) The power manager 48 triggers its internal state machine following the request from application 32a. The power manager 48 has also received the CAN bus state transmission from the MCU and so it knows the CAN bus is turned off and the vehicle is powered down. The new power state is accepted.
5) The power manager forwards (communication 206) the new power state to the virtual machine manager 46.
6) The virtual machine manager 46 manages the power lifecycle (via first control signal(s) 207) of the virtual machines as described below in order to transition the virtual machines 26, 28, 30 to the correct local power states corresponding to the new global power state.
7) Once all the virtual machines are in their correct local power states, the virtual machine manager 46 sends an acknowledgment communication 208 back to the power manager 48.
8) Upon receiving the acknowledgement communication 208, the power manager 48 sends a message to the MCU 16 to set the MCU in the correct power state.
9) Once the virtual machines 26, 28,30 and the MCU are all in the correct power states, the power manager 48 sends a control signal 210 (a "second control signal") to the hypervisor OS 24 & drivers to suspend or shutdown the application processor 14.

### Virtual Machine Manager

The virtual machine manager 46 is responsible for the lifecycle of the virtual machines 26, 28, 30. The virtual machine manager 46 monitors the state of the virtual machines, can start & stop them, and make sure they are all running correctly at any given time.

A virtual machine has three different power states (local power states) it can be in: active, shutdown or suspended. The vehicle controller 14 power management is focused around these three virtual machine states.

The vehicle controller 14 has different (global) power states and the virtual machine manager 46 has a configuration file 90 (shown in Figure 6) that represents the information in Table 1 above and that maps the local power state of each virtual machine to a vehicle controller 14 global power state.

As discussed above, the virtual machine manager 46 has a virtual machine manager client (VMMC - 56, 58, 60) process running in each of the virtual machines that serves as a local monitor.

An overview of the method of operation of the virtual machine manager 46 is as follows:
1) Once the power manager 48 has decided on a power state transition for the vehicle controller 14 (as a result of the process noted above in relation to Figure 6), the power manager 48 sends the new power state to the virtual machine manager 46 over the controller 14 middleware layer (see communication 72 in Figure 3).
2) The virtual machine manager 46, upon receipt of the power state transition from the power manager 48, checks the configuration file 90 and maps each virtual machine local power state to the new controller global power state.
3) The virtual machine manager 46 then sends, via a "first control signal" 207, the new local power state for each virtual machine individually to the respective VMM clients 56, 58, 60 (see control signals 207 in Figure 6).
4) The VMM Clients in each virtual machine then manage the power state transition for their respective virtual machine. If one or more keep alive messages are active for a virtual machine 26, 28, 30, then the local power state for that virtual machine 26, 28, 30 is updated once all keep alive messages therefore have been cleared, or upon expiration of the timer 62 as described above. Taking virtual machine 26 as an example:
   a. For a transition to the "shutdown" local power state, the VMM Client 56 will send a short warning (e.g. a few seconds) to the applications within the virtual machine 26 then shutdown the OS kernel and with it the entire virtual machine 26. The virtual machine manager 46 detects that the virtual machine has been shutdown and keeps track of it. Similar processes happen in each virtual machine.
   b. For a transition to the "suspend" local power state, the VMM Client 56 will send a message to the virtual machine power management application (e.g. application 32a), the virtual machine (e.g. 26) will now suspend its activities & drivers, will handshake with the VMM Client 56 once it's ready to suspend, then the VMM Client sends a suspend command signal to the OS kernel. This will suspend the entire virtual machine 26. The virtual machine manager 46 detects that the virtual machine has been suspended and keeps track of it.
   c. For a transition to the "active" local power state, if the virtual machine 26 is already running, nothing has to be done, otherwise the virtual machine manager 46 will start the virtual machine 26.
5) Once all the virtual machines have transitioned to their new local power states, the virtual machine manager 46 sends a message back to the power manager 48 to inform the power manager that the virtual machines are now in the correct state.
6) Upon receipt of the message in (6), the power manager 48 continues its power management activities as described above.

An overview of the method of changing a global power state of a vehicle controller 14 is shown in Figure 7.

In step 300, a vehicle parameter signal 200 is received indicative of a required global power state of the vehicle controller 14 within the vehicle control system 12. In step 302, a local power state is determined for each virtual machine 26, 28, 30 in dependence on the received vehicle parameter signal 200 and the configuration file 90. In step 304 a current local power state of each virtual machine is updated to the respective determined local power state therefor. If one or more keep alive messages are active for a virtual machine 26, 28, 30, then the local power state for that virtual machine 26, 28, 30 is updated once all keep alive messages therefore have been cleared, or upon expiration of the timer 62 as described above. In step 306 a current global power state of the vehicle control system is updated to the required global power state.

With reference to Figure 8, there is illustrated a simplified example of a control system 12 such as may be adapted to implement the method of Figures 4 and 7 described above. The control system 12 comprises one or more controllers 14.

It is to be understood that the or each controller 14 can comprise a hypervisor 24 having one or more virtual machines. The controller 14 may comprise electronic processors (e.g., a microprocessor, a microcontroller, an application specific integrated circuit (ASIC), etc.), and may comprise a single control unit or computational device, or alternatively different functions of the or each controller 14 may be embodied in, or hosted in, different control units or computational devices. As used herein, the term "controller," "control unit," or "computational device" will be understood to include a single controller, control unit, or computational device, and a plurality of controllers, control units, or computational devices collectively operating to provide the required control functionality. A set of instructions could be provided which, when executed, cause the controller 14 to implement the control techniques described herein (including some or all of the functionality required for the methods described herein). The set of instructions could be embedded in said one or more electronic processors of the controller 14; or alternatively, the set of instructions could be provided as software to be executed in the controller 14. A first controller or control unit may be implemented in software run on one or more processors. One or more other controllers or control units may be implemented in software run on one or more processors, optionally the same one or more processors as the first controller or control unit. Other arrangements are also useful.

In the example illustrated in Figure 8, the or each controller 14 comprises at least one electronic processor 320 having one or more electrical input(s) 322 for receiving one or more (input signal(s)), and one or more electrical output(s) 324 for outputting one or more (output signal(s)). The or each controller 14 further comprises at least one memory device 330 electrically coupled to the at least one electronic processor 320 and having instructions 340 stored therein. The at least one electronic processor 320 is configured to access the at least one memory device 330 and execute the instructions 340 thereon so as to control a power state of a vehicle controller 14.

The, or each, electronic processor 320 may comprise any suitable electronic processor (e.g., a microprocessor, a microcontroller, an ASIC, etc.) that is configured to execute electronic instructions. The, or each, electronic memory device 330 may comprise any suitable memory device and may store a variety of data, information, threshold value(s), lookup tables or other data structures, and/or instructions therein or thereon. In an embodiment, the memory device 330 has information and instructions for software, firmware, programs, algorithms, scripts, applications, etc. stored therein or thereon that may govern all or part of the methodology described herein. The processor, or each, electronic processor 320 may access the memory device 330 and execute and/or use that or those instructions and information to carry out or perform some or all of the functionality and methodology describe herein.

The at least one memory device 330 may comprise a computer-readable storage medium (e.g. a non-transitory or non-transient storage medium) that may comprise any mechanism for storing information in a form readable by a machine or electronic processors/computational devices, including, without limitation: a magnetic storage medium (e.g. floppy diskette); optical storage medium (e.g. CD-ROM); magneto optical storage medium; read only memory (ROM); random access memory (RAM); erasable programmable memory (e.g. EPROM ad EEPROM); flash memory; or electrical or other types of medium for storing such information/instructions.

Example controllers 14 have been described comprising at least one electronic processor 320 configured to execute electronic instructions stored within at least one memory device 330, which when executed causes the electronic processor(s) 320 to carry out the method as hereinbefore described. However, it is contemplated that the present invention is not limited to being implemented by way of programmable processing devices, and that at least some of, and in some embodiments all of, the functionality and or method steps of the present invention may equally be implemented by way of non-programmable hardware, such as by way of non-programmable ASIC, Boolean logic circuitry, etc.

It will be appreciated that various changes and modifications can be made to the present invention without departing from the scope of the present application.

## Claims

1. A vehicle control system (12) comprising one or more controllers (14), the vehicle control system (12) comprising a global power state and comprising at least two virtual machines (26, 28, 30) being hosted on the one or more controllers wherein each virtual machine (26, 28, 30) has a local power state, the vehicle control system (12) configured to:
receive at least one active status indication from at least one virtual machine (26, 28, 30), the at least one active status indication comprising information of a power management requirement of at least one application running on the virtual machine that the indication has been received from;
determine, in dependence on the at least one active status indication, a power requirement of the at least one virtual machine (26, 28, 30) that the indication has been received from, said power requirement comprising either a positive power requirement whereby power is required to be maintained, or a negative power requirement whereby power is no longer required to be maintained;
receive a vehicle parameter signal indicative of a required global power state of the vehicle control system (12);
determine a local power state for each virtual machine (26, 28, 30) in dependence on the received vehicle parameter signal;
update a current local power state of each virtual machine (26, 28, 30) to the respective determined local power state therefor; and
update a current global power state of the vehicle control system (12) to the required global power state,
wherein if one or more of the virtual machine(s) (26, 28, 30) is determined as having a positive power requirement, the vehicle control system (12) is configured to inhibit updating of the current global power state of the vehicle control system (12).

2. A vehicle control system (12) as claimed in Claim 1, wherein the vehicle control system (12) is configured to:
in response to a received active status indication comprising a positive power requirement message from a virtual machine (26, 28, 30), increase a power status counter value for said virtual machine (26, 28, 30); and
in response to a received active status indication comprising a negative power requirement message from a virtual machine (26, 28, 30), decrease a power status counter value for the said virtual machine (26, 28, 30).

3. A vehicle control system (12) as claimed in Claim 2, wherein the vehicle control system (12) is configured to determine the power requirement of the at least one virtual machine by comparing the power status counter value therefor with a datum point.

4. A vehicle control system (12) as claimed in any one of claims 2 or 3, wherein the vehicle control system (12) is configured to initiate a timer upon receipt of the at least one active status indication from the at least one virtual machine (26, 28, 30).

5. A vehicle control system (12) as claimed in claim 4, when dependent on claim 3, wherein the vehicle control system (12) is configured to reset the power status counter value for the at least one virtual machine to the datum point at the expiry of the timer.

6. A vehicle control system (12) as claimed in claim 4 or claim 65, wherein, if one or more of the virtual machine(s) (26, 28, 30) is determined as having a positive power requirement, the vehicle control system (12) is configured to set a keep alive flag to inhibit updating of the current global power state of the vehicle control system (12), and upon expiry of the timer the vehicle control system (12) is configured to clear the keep alive flag.

7. A vehicle control system (12) as claimed in any one of claims 2 to 6, wherein the current local power state of each virtual machine (26, 28, 30) is updated to the respective determined local power state therefor once the power status counter value therefore has been cleared and/or upon expiry of the timer.

8. A vehicle control system (12) as claimed in any preceding claim the current global power state of the vehicle control system (12) is updated to the required global power state once all the virtual machines have transitioned to their new local power states.

9. A vehicle control system (12) as claimed in any preceding claim, wherein the vehicle control system (12) comprises a virtual machine manager (46) configured to:
receive the at least one active status indication from at least one virtual machine (26, 28, 30);
determine, in dependence on the at least one active status indication, the power requirement of the at least one virtual machine (26, 28, 30) that the indication has been received from;
determine the local power state for each virtual machine (26, 28, 30) in dependence on the required global power state; and
update the current local power state of each virtual machine (26, 28, 30) to the respective determined local power state therefor.

10. A vehicle control system (12) as claimed in any preceding claim, wherein the vehicle control system (12) comprises a power manager (48) configured to:
receive the vehicle parameter signal indicative of a required global power state of the vehicle control system;
receive an indication that the current local power state of each virtual machine (26, 28, 30) has been updated to the respective determined local power state therefor; and
update a current global power state of the vehicle control system (12) to the required global power state.

11. A vehicle control system (12) as claimed in claim 10, wherein at least one virtual machine (26) comprises a telematics control unit comprising a power management service (32a) configured to receive the vehicle parameter signal, send a local power state request to the power manager (48), wherein the local power state request is a request to prevent the telematics control unit transitioning to a shut-down local power state.

12. A vehicle (10) comprising a vehicle control system (12) as claimed in any preceding claim.

13. A method of changing a global power state of a vehicle control system comprising one or more controllers and at least two virtual machines hosted on one of the controllers wherein each virtual machine has a local power state, the method comprising:
receiving at least one active status indication from at least one virtual machine (26, 28, 30), the at least one active status indication comprising information of a power management requirement of at least one application running on the virtual machine that the indication has been received from;
determining, in dependence on the at least one active status indication, a power requirement of the at least one virtual machine (26, 28, 30) that the indication has been received from, said power requirement comprising either a positive power requirement whereby power is required to be maintained, or a negative power requirement whereby power is no longer required to be maintained;
receiving a vehicle parameter signal indicative of a required global power state of the vehicle control system;
determining, based on the received vehicle parameter signal, a local power state for each virtual machine in dependence on the received vehicle parameter signal;
updating a current local power state of each virtual machine to the respective determined local power state therefor; and
updating a current global power state of the vehicle control system (12) to the required global power state,
wherein if one or more of the virtual machine(s) (26, 28, 30) is determined as having a positive power requirement, the method comprises inhibiting updating of the current global power state of the vehicle control system (12).

14. A non-transitory computer readable medium comprising computer readable instructions that, when executed by a processor, cause performance of the method of claim 13.

## Patentansprüche

1. Fahrzeugsteuersystem (12), umfassend eine oder mehrere Steuerungen (14), das Fahrzeugsteuersystem (12) umfassend einen globalen Leistungszustand und umfassend mindestens zwei virtuelle Maschinen (26, 28, 30), die auf der einen oder den mehreren Steuerungen gehostet werden, wobei jede virtuelle Maschine (26, 28, 30) einen lokalen Leistungszustand aufweist, wobei das Fahrzeugsteuersystem (12) konfiguriert ist zum:
Empfangen mindestens einer Anzeige eines aktiven Status von mindestens einer virtuellen Maschine (26, 28, 30), die mindestens eine Anzeige des aktiven Status umfassend Informationen über einen Leistungsverwaltungsbedarf mindestens einer Anwendung, die auf der virtuellen Maschine läuft, von der die Anzeige empfangen wurde;
Bestimmen, in Abhängigkeit von der mindestens einen Anzeige des aktiven Status, eines Leistungsbedarfs der mindestens einen virtuellen Maschine (26, 28, 30), von der die Anzeige empfangen wurde, der Leistungsbedarf umfassend entweder einen positiven Leistungsbedarf, wobei eine Leistung aufrechterhalten werden muss, oder einen negativen Leistungsbedarf, wobei die Leistung nicht länger aufrechterhalten werden muss;
Empfangen eines Fahrzeugparametersignals, das einen erforderlichen globalen Leistungszustand des Fahrzeugsteuersystems (12) anzeigt;
Bestimmen eines lokalen Leistungszustands für jede virtuelle Maschine (26, 28, 30) in Abhängigkeit von dem empfangenen Fahrzeugparametersignal;
Aktualisieren eines aktuellen lokalen Leistungszustands jeder virtuellen Maschine (26, 28, 30) auf den jeweiligen bestimmten lokalen Leistungszustand dafür; und
Aktualisieren eines aktuellen globalen Leistungszustands des Fahrzeugsteuersystems (12) auf den erforderlichen globalen Leistungszustand,
wobei, falls bestimmt wird, dass eine oder mehrere der virtuellen Maschine(n) (26, 28, 30) einen positiven Leistungsbedarf aufweist, das Fahrzeugsteuersystem (12) konfiguriert ist, um das Aktualisieren des aktuellen globalen Leistungszustands des Fahrzeugsteuersystems (12) zu unterbinden.

2. Fahrzeugsteuersystem (12) nach Anspruch 1, wobei das Fahrzeugsteuersystem (12) konfiguriert ist zum:
als Reaktion auf eine empfangene Anzeige des aktiven Status, umfassend eine positive Leistungsbedarfsnachricht von einer virtuellen Maschine (26, 28, 30), Erhöhen eines Leistungsstatuszählerwerts für die virtuelle Maschine (26, 28, 30); und
als Reaktion auf eine empfangene Anzeige des aktiven Status, umfassend eine negative Leistungsbedarfsnachricht von einer virtuellen Maschine (26, 28, 30), Verringern eines Leistungsstatuszählerwerts für die virtuelle Maschine (26, 28, 30).

3. Fahrzeugsteuersystem (12) nach Anspruch 2, wobei das Fahrzeugsteuersystem (12) konfiguriert ist, um den Leistungsbedarf der mindestens einen virtuellen Maschine durch Vergleichen des Leistungsstatuszählerwerts dafür mit einem Bezugspunkt zu bestimmen.

4. Fahrzeugsteuersystem (12) nach einem der Ansprüche 2 oder 3, wobei das Fahrzeugsteuersystem (12) konfiguriert ist, um einen Zeitgeber bei einem Empfang der mindestens einen Anzeige des aktiven Status von der mindestens einen virtuellen Maschine (26, 28, 30) zu initiieren.

5. Fahrzeugsteuersystem (12) nach Anspruch 4, wenn abhängig von Anspruch 3, wobei das Fahrzeugsteuersystem (12) konfiguriert ist, um den Leistungsstatuszählerwert für die mindestens eine virtuelle Maschine bei dem Ablauf auf den Bezugspunkt des Zeitgebers zurückzusetzen.

6. Fahrzeugsteuersystem (12) nach Anspruch 4 oder Anspruch 65, wobei, falls eine oder mehrere der virtuellen Maschine(n) (26, 28, 30) als einen positiven Leistungsbedarf aufweisend bestimmt wird, das Fahrzeugsteuersystem (12) konfiguriert ist, um ein Keep-Alive-Flag zu setzen, um eine Aktualisierung des aktuellen globalen Leistungszustands des Fahrzeugsteuersystems (12) zu unterbinden, und nach Ablauf des Zeitgebers das Fahrzeugsteuersystem (12) konfiguriert ist, um das Keep-Alive-Flag zu löschen.

7. Fahrzeugsteuersystem (12) nach einem der Ansprüche 2 bis 6, wobei der aktuelle lokale Leistungszustand jeder virtuellen Maschine (26, 28, 30) auf den jeweiligen bestimmten lokalen Leistungszustand dafür aktualisiert wird, sobald der Leistungsstatuszählerwert dafür gelöscht wurde und/oder bei Ablauf des Zeitgebers.

8. Fahrzeugsteuersystem (12) nach einem der vorstehenden Ansprüche, wobei der aktuelle globale Leistungszustand des Fahrzeugsteuersystems (12) auf den erforderlichen globalen Leistungszustand aktualisiert wird, sobald alle virtuellen Maschinen in ihre neuen lokalen Leistungszustände übergegangen sind.

9. Fahrzeugsteuersystem (12) nach einem der vorstehenden Ansprüche, wobei das Fahrzeugsteuersystem (12) eine Verwaltungseinrichtung (46) für virtuelle Maschinen umfasst, die konfiguriert ist zum:
Empfangen der mindestens einen Anzeige des aktiven Status von mindestens einer virtuellen Maschine (26, 28, 30);
Bestimmen, in Abhängigkeit von der mindestens einen Anzeige des aktiven Status, des Leistungsbedarfs der mindestens einen virtuellen Maschine (26, 28, 30), von der die Anzeige empfangen wurde;
Bestimmen des lokalen Leistungszustands für jede virtuelle Maschine (26, 28, 30) in Abhängigkeit von dem erforderlichen globalen Leistungszustand; und
Aktualisieren des aktuellen lokalen Leistungszustands jeder virtuellen Maschine (26, 28, 30) auf den jeweiligen dafür bestimmten lokalen Leistungszustand.

10. Fahrzeugsteuersystem (12) nach einem der vorstehenden Ansprüche, wobei das Fahrzeugsteuersystem (12) eine Leistungsverwaltungseinrichtung (48) umfasst, die konfiguriert ist zum:
Empfangen des Fahrzeugparametersignals, das einen erforderlichen globalen Leistungszustand des Fahrzeugsteuersystems anzeigt;
Empfangen einer Anzeige, dass der aktuelle lokale Leistungszustand jeder virtuellen Maschine (26, 28, 30) auf den jeweiligen dafür bestimmten lokalen Leistungszustand aktualisiert wurde; und
Aktualisieren eines aktuellen globalen Leistungszustands des Fahrzeugsteuersystems (12) auf den erforderlichen globalen Leistungszustand.

11. Fahrzeugsteuersystem (12) nach Anspruch 10, wobei mindestens eine virtuelle Maschine (26) eine Telematiksteuereinheit umfasst, umfassend einen Leistungsverwaltungsdienst (32a), der konfiguriert ist, um das Fahrzeugparametersignal zu empfangen, eine lokale Leistungszustandsanforderung an den Leistungsverwalter (48) zu senden, wobei die lokale Leistungszustandsanforderung eine Anforderung ist, zu verhindern, dass die Telematiksteuereinheit in einen abgeschalteten lokalen Leistungszustand übergeht.

12. Fahrzeug (10), umfassend ein Fahrzeugsteuersystem (12) nach einem der vorstehenden Ansprüche.

13. Verfahren zum Ändern eines globalen Leistungszustands eines Fahrzeugsteuersystems, umfassend eine oder mehrere Steuerungen und mindestens zwei virtuelle Maschinen, die auf einer der Steuerungen gehostet werden, wobei jede virtuelle Maschine einen lokalen Leistungszustand aufweist, das Verfahren umfassend:
Empfangen mindestens einer Anzeige eines aktiven Status von mindestens einer virtuellen Maschine (26, 28, 30), die mindestens eine Anzeige des aktiven Status umfassend Informationen über einen Leistungsverwaltungsbedarf mindestens einer Anwendung, die auf der virtuellen Maschine läuft, von der die Anzeige empfangen wurde;
Bestimmen, in Abhängigkeit von der mindestens einen Anzeige des aktiven Status, eines Leistungsbedarfs der mindestens einen virtuellen Maschine (26, 28, 30), von der die Anzeige empfangen wurde, der Leistungsbedarf umfassend entweder einen positiven Leistungsbedarf, wobei die Leistung aufrechterhalten werden muss, oder einen negativen Leistungsbedarf, wobei die Leistung nicht länger aufrechterhalten werden muss;
Empfangen eines Fahrzeugparametersignals, das einen erforderlichen globalen Leistungszustand des Fahrzeugsteuersystems anzeigt;
Bestimmen, basierend auf dem empfangenen Fahrzeugparametersignal, eines lokalen Leistungszustands für jede virtuelle Maschine in Abhängigkeit von dem empfangenen Fahrzeugparametersignal;
Aktualisieren eines aktuellen lokalen Leistungszustands jeder virtuellen Maschine auf den jeweiligen bestimmten lokalen Leistungszustand dafür; und
Aktualisieren eines aktuellen globalen Leistungszustands des Fahrzeugsteuersystems (12) auf den erforderlichen globalen Leistungszustand,
wobei, wenn bestimmt wird, dass eine oder mehrere der virtuellen Maschine(n) (26, 28, 30) einen positiven Leistungsbedarf aufweist, das Verfahren das Unterbinden einer Aktualisierung des aktuellen globalen Leistungszustands des Fahrzeugsteuersystems (12) umfasst.

14. Nichtflüchtiges computerlesbares Medium, umfassend computerlesbare Anweisungen, die, wenn sie durch einen Prozessor ausgeführt werden, die Durchführung des Verfahrens nach Anspruch 13 veranlassen.

## Revendications

1. Système de commande de véhicule (12) comprenant un ou des dispositifs de commande (14), le système de commande de véhicule (12) comprenant un état de puissance global et comprenant au moins deux machines virtuelles (26, 28, 30) hébergées sur un ou des dispositifs de commande, dans lequel chaque machine virtuelle (26, 28, 30) a un état de puissance local, le système de commande de véhicule (12) étant configuré pour :
recevoir au moins une indication d'état actif de la part d'au moins une machine virtuelle (26, 28, 30), l'au moins une indication d'état actif comprenant des informations sur une exigence de gestion de l'alimentation d'au moins une application s'exécutant sur la machine virtuelle dont l'indication a été reçue ;
déterminer, en fonction d'au moins une indication d'état actif, une exigence en alimentation de l'au moins une machine virtuelle (26, 28, 30) dont l'indication a été reçue, ladite exigence en alimentation comprenant soit une exigence en alimentation positive en vertu de laquelle l'alimentation doit être maintenue, soit une exigence en alimentation négative en vertu de laquelle l'alimentation ne doit plus être maintenue ;
recevoir un signal de paramètre du véhicule indiquant un état de puissance global requis du système de commande du véhicule (12) ;
déterminer un état d'alimentation local pour chaque machine virtuelle (26, 28, 30) en fonction du signal de paramètre de véhicule reçu ;
mettre à jour l'état actuel de l'alimentation locale de chaque machine virtuelle (26, 28, 30) en fonction de l'état de l'alimentation locale déterminé respective ; et
mettre à jour un état de puissance global actuel du système de commande du véhicule (12) en fonction de l'état de puissance global requis,
dans lequel, si une ou des machines virtuelles (26, 28, 30) sont déterminées comme ayant un besoin de puissance positif, le système de commande du véhicule (12) est configuré pour inhiber la mise à jour de l'état de puissance global actuel du système de commande du véhicule (12).

2. Système de commande de véhicule (12) selon la revendication 1, dans lequel le système de commande de véhicule (12) est configuré pour :
en réponse à une indication d'état actif reçue comprenant un message d'exigence d'alimentation positive d'une machine virtuelle (26, 28, 30), augmenter une valeur de compteur d'état d'alimentation pour ladite machine virtuelle (26, 28, 30) ; et
en réponse à une indication d'état actif reçue comprenant un message de besoin de puissance négatif provenant d'une machine virtuelle (26, 28, 30), diminuer une valeur de compteur d'état de puissance pour ladite machine virtuelle (26, 28, 30).

3. Système de commande de véhicule (12) selon la revendication 2, dans lequel le système de commande de véhicule (12) est configuré pour déterminer l'exigence en alimentation de l'au moins une machine virtuelle en comparant la valeur du compteur d'état d'alimentation à un point de référence.

4. Système de commande de véhicule (12) selon l'une quelconque des revendications 2 ou 3, dans lequel le système de commande de véhicule (12) est configuré pour déclencher un temporisateur à la réception de l'au moins une indication d'état actif de la part de l'au moins une machine virtuelle (26, 28, 30).

5. Système de commande de véhicule (12) selon la revendication 4, lorsqu'il dépend de la revendication 3, dans lequel le système de commande de véhicule (12) est configuré pour réinitialiser la valeur du compteur d'état d'alimentation pour l'au moins une machine virtuelle au point de référence à l'expiration du temporisateur.

6. Système de commande de véhicule (12) selon la revendication 4 ou la revendication 65, dans lequel, si une ou des machines virtuelles (26, 28, 30) sont déterminées comme ayant une exigence de puissance positive, le système de commande de véhicule (12) est configuré pour définir un drapeau de maintien en vie afin d'empêcher la mise à jour de l'état de puissance global actuel du système de commande de véhicule (12), et à l'expiration du temporisateur, le système de commande de véhicule (12) est configuré pour effacer le drapeau de maintien en vie.

7. Système de commande de véhicule (12) selon l'une quelconque des revendications 2 à 6, dans lequel l'état de puissance local actuel de chaque machine virtuelle (26, 28, 30) est mis à jour à l'état de puissance local respectif déterminé une fois que la valeur du compteur d'état de puissance a été effacée et/ou à l'expiration du temporisateur.

8. Système de commande de véhicule (12) selon l'une quelconque des revendications précédentes : l'état de puissance global actuel du système de commande de véhicule (12) est mis à jour vers l'état de puissance global requis une fois que toutes les machines virtuelles sont passées à leurs nouveaux états de puissance locaux.

9. Système de commande de véhicule (12) selon l'une quelconque des revendications précédentes, dans lequel le système de commande de véhicule (12) comprend un gestionnaire de machine virtuelle (46) configuré pour :
recevoir l'au moins une indication d'état actif de la part d'au moins une machine virtuelle (26, 28, 30) ;
déterminer, en fonction d'au moins une indication d'état actif, l'exigence en alimentation de l'au moins une machine virtuelle (26, 28, 30) dont l'indication a été reçue ;
déterminer l'état d'alimentation local de chaque machine virtuelle (26, 28, 30) en fonction de l'état d'alimentation global requis ; et
mettre à jour l'état actuel de l'alimentation locale de chaque machine virtuelle (26, 28, 30) en fonction de l'état de l'alimentation locale déterminé.

10. Système de commande de véhicule (12) selon l'une quelconque des revendications précédentes, dans lequel le système de commande de véhicule (12) comprend un gestionnaire de puissance (48) configuré pour :
recevoir le signal de paramètre du véhicule indiquant un état de puissance global requis du système de commande du véhicule ;
recevoir une indication selon laquelle l'état d'alimentation local actuel de chaque machine virtuelle (26, 28, 30) a été mis à jour en fonction de l'état d'alimentation local déterminé ; et
mettre à jour un état de puissance global actuel du système de commande du véhicule (12) en fonction de l'état de puissance global requis.

11. Système de commande de véhicule (12) selon la revendication 10, dans lequel au moins une machine virtuelle (26) comprend une unité de commande télématique comprenant un service de gestion de l'alimentation (32a) configuré pour recevoir le signal de paramètre de véhicule, envoyer une demande d'état d'alimentation local au gestionnaire d'alimentation (48), dans lequel la demande d'état d'alimentation local est une demande pour empêcher l'unité de commande télématique de passer à un état d'alimentation local d'arrêt.

12. Véhicule (10) comprenant un système de commande de véhicule (12) selon l'une quelconque des revendications précédentes.

13. Procédé de modification d'un état de puissance global d'un système de commande de véhicule comprenant un ou des dispositifs de commande et au moins deux machines virtuelles hébergées sur l'un des dispositifs de commande, dans lequel chaque machine virtuelle a un état de puissance local, le procédé comprenant :
la réception d'au moins une indication d'état actif provenant d'au moins une machine virtuelle (26, 28, 30), l'au moins une indication d'état actif comprenant des informations sur une exigence de gestion de l'alimentation d'au moins une application s'exécutant sur la machine virtuelle dont l'indication a été reçue ;
la détermination, en fonction de l'au moins une indication d'état actif, d'une exigence en alimentation de l'au moins une machine virtuelle (26, 28, 30) dont l'indication a été reçue, ladite exigence en alimentation comprenant soit une exigence en alimentation positive par laquelle l'alimentation doit être maintenue, soit une exigence en alimentation négative par laquelle l'alimentation n'a plus besoin d'être maintenue ;
la réception d'un signal de paramètre du véhicule indiquant un état de puissance global requis du système de commande du véhicule ;
la détermination, sur la base du signal de paramètre de véhicule reçu, d'un état d'alimentation local pour chaque machine virtuelle en fonction du signal de paramètre de véhicule reçu ;
la mise à jour de l'état actuel de l'alimentation locale de chaque machine virtuelle en fonction de l'état de l'alimentation locale déterminé ; et
la mise à jour de l'état de puissance global actuel du système de commande du véhicule (12) à l'état de l'alimentation global requis,
dans lequel, si une ou des machines virtuelles (26, 28, 30) sont considérées comme ayant une exigence d'alimentation positive, le procédé comprend l'inhibition de la mise à jour de l'état d'alimentation global actuel du système de commande du véhicule (12).

14. Support non transitoire lisible par ordinateur comprenant des instructions lisibles par ordinateur qui, lorsqu'elles sont exécutées par un processeur, amènent la réalisation du procédé selon la revendication 13.
